# EUROPEAN PATENT APPLICATION

(11) **EP 2 712 667 A2**
(43) Date of publication of application: **02.04.2014**
(21) Application number: 13186082.7
(22) Date of filing: 26.09.2013
(51) Int. Cl.: B01D 46/00, B01D 53/08

(54) **Adsorption filter**

(30) Priority: 27.09.2012 IT MO20120234
(71) Applicant: Societa' per Azioni Curti - Costruzioni Meccaniche, 48014 Castel Bolognese (RA) (IT); Bortolani, Maria Elisabetta, 41125 Modena (IT)
(72) Inventor: Bortolani, Giuseppe, 41100 Modena (IT)
(74) Representative: Crugnola, Pietro

(57) **Abstract**

An adsorption filter (1; 1a; b; 1c) comprises a body (2) inside which a chamber (3, 3b) is defined into which a gaseous fluid to be filtered is delivered, said body (2) being provided with a delivery conduit (4) for delivering said gaseous fluid to said chamber (3b) and with a discharging conduit (7) for discharging the gaseous fluid filtered by the body (2), inside said body (2) a filtering material (M) can be delivered that is intended for being traversed by said gaseous fluid, said body (2) being provided above with at least one loading conduit (8, 8a) for said filtering material (M) and with a discharging mouth (5) associated with a check valve (6), said filtering material (M) being suitable for removing from said gaseous fluid solid particles and harmful gaseous substances contained therein.

## Description

The present invention relates to an adsorption filter, in particular an adsorption filter for purifying hot gaseous fluids up to temperatures of several hundred degrees that contain dusts and aggressive chemical agents, or anyway to be eliminated.

From the prior art adsorption filters are known in which a current of gaseous fluid to be purified is passed through an adsorbent material that removes from the current of gaseous fluid solid particles and possible aggressive chemical agents present therein.

The known filters have the drawback that, when the filtering material is exhausted and has to be replaced, the filter has to be dismantled in order to be able to replace the filtering material, which entails wasted time and manpower and can also entail a temporary arrest of the plant using the filter.

An object of the present invention is to remedy the aforesaid drawbacks.

The aforesaid object is achieved with an adsorption filter with the features of claim 1, or of claim 11.

Owing to the invention, the adsorption filter can work in a continuous cycle, without the need to have to dismantle the filter to replace the exhausted adsorbent material, which also requires the filter to cool or suitable measures to be taken to protect personnel replacing the adsorbent material from high temperatures.

This enables considerable time and manpower to be saved and eliminates the possibility of filtering plant downtime to maintain the adsorption filter or filters present in the plant. Certain methods of carrying out the invention are illustrated merely by way of non-limiting example in the description that follows, with reference to the attached drawings, in which:
Figure 1 is a section along a longitudinal axis S of a first embodiment of an adsorption filter according to the invention;
Figure 2 is a section like the one in Figure 1, in which the filtering material has been omitted;
Figure 3 is a section along a longitudinal axis S1 of a second embodiment of an adsorption filter according to the invention;
Figure 4 is a section like the one in Figure 3, in which the filtering material has been omitted;
Figure 5 is section V-V of Figure 3;
Figure 6 is an enlarged detail of Figure 5;
Figure 7 is an enlarged detail A of Figure 4;
Figure 8 a section along a longitudinal axis S2 of a third embodiment of an adsorption filter according to the invention;
Figure 9 is section IX-IX of Figure 8, in which the filtering material has been omitted;
Figure 10 is a section along a longitudinal axis S3 of a fourth embodiment of an adsorption filter according to the invention;
Figure 11 is a section like the one in Figure 10, in which the filtering material has been omitted;
Figure 12 is an enlarged detail B of Figure 11, in which the filtering material is visible.

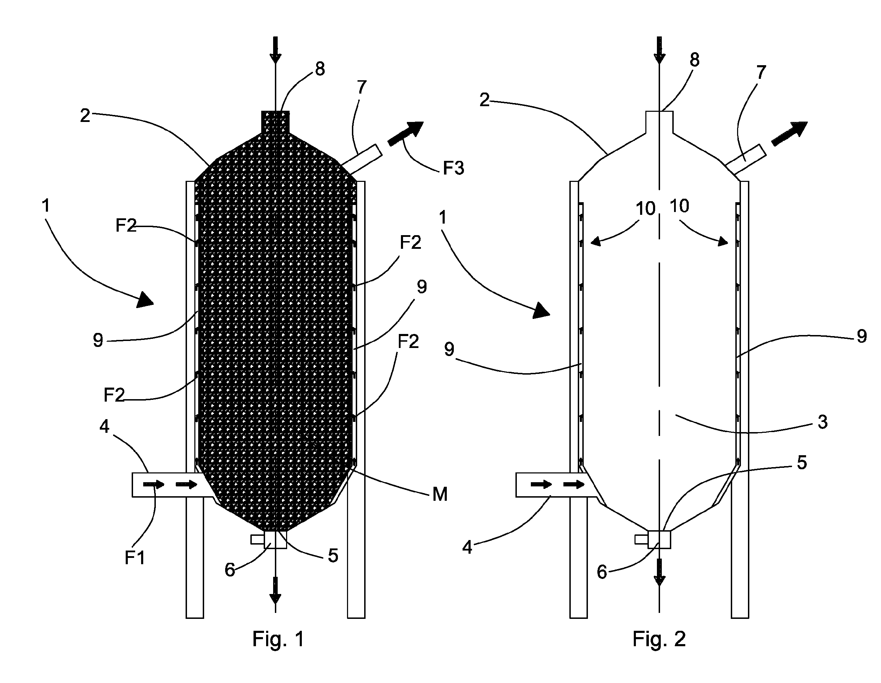

In Figures 1 and 2 a first embodiment of a filter 1 according to the invention is illustrated. The filter 1 comprises a body 2 inside which a chamber 3 is obtained, which is filled with a filtering material M. The filtering material can consist, for example, of a mixture of adsorbent materials, to which lime and/or soda is added, such as bentonite, ferrous oxide, expanded clay, molecular sieves, for example aluminosilicates , in particular natural or artificial zeolites. The dosage of adsorbent materials depends on the nature of the harmful substances that have to be eliminated from the gaseous fluid to be filtered.

In the lower part of the body 2 there are provided a delivery conduit 4 for delivering a gaseous fluid to be filtered and a discharging mouth 5, closed by a check valve 6, for example a star valve, via which the exhausted filtering material M the filtering material M can be discharged from the body 2 to be replaced with the new filtering material M.

The delivery conduit 4 leads into a liner 9 that surrounds the chamber 3 and communicates with said chamber through openings, which are not shown in Figures 1 and 2, made in a surface 10 of the liner 9 facing the inside of the chamber 3. The aforesaid openings can be obtained by making the surface 10 of the liner 9 with a latticed structure. The liner 9 is used to distribute in a substantially uniform manner the fluid to be filtered inside the chamber 3 and thus in the filtering material M.

In the upper part of the body 2 a discharging conduit 7, through which the filtered gaseous fluid can be discharged from the filter 1, and a loading conduit 8, through which the filtering material M can be delivered to the filter 1, are provided.

The operation of the filter 1 according to the invention is the following:
the gaseous fluid to be filtered is delivered to the filter 1 through the delivery conduit 4 and
enters the liner 9 that surrounds the chamber 3 that is filled with the filtering material M.

The gaseous fluid is distributed in the liner 9 and passes therefrom, through the openings of the wall 10, into the chamber 3 to then exit therefrom through the discharging conduit 7 after traversing the filtering material M, which removes from the gaseous fluid possible solid particles and aggressive chemical agents contained therein.

The arrows F1, F2 and F3 indicate the path of the gaseous fluid from the inlet to the outlet of the filter 1.

In order to compensate for the loss of load to which the gaseous fluid is subjected when passing through the filtering material M, the pressure in the delivery conduit 4 must be greater than the pressure in the discharging conduit 7. The pressure difference between the delivery conduit and the discharging conduit must be greater than the load losses to which the gaseous fluid is subjected when traversing the filter 1. This can be obtained by delivering the pressurised gaseous fluid to the delivery conduit 4, or creating a vacuum in the discharging conduit 7.

The exhausted filtering material M can be discharged from the chamber 3 through the discharging mouth 5 by opening the check valve 6, and be replaced with new filtering material M, delivered through the loading conduit 8.

This operation can be conducted without needing to interrupt the flow of fluid to be filtered in the filter 1, which leads to the advantageous elimination of downtime for cleaning the filter, which is inevitable in filters known from the prior art. The exhausted filtering material M can be replaced at set intervals, depending on the nature and flowrate of the gaseous fluid to be filtered, or the filter 1 can be provided with sensor means that warns that the exhausted filtering material and has to be replaced. The sensor means can comprise a first sensor that is suitable for detecting the degree of acidity of the gaseous fluid upstream of the filter 1 and a second sensor suitable for detecting the degree of acidity of the gaseous fluid downstream of the filter 1. The difference between the values of the degree of acidity detected by said first sensor and by said second sensor are indicative of the efficiency of the filter and of the fact that the filtering material M is exhausted and can be used to command the replacement of the filtering material, by means of the management software of the plant into which the filter 1 is inserted.

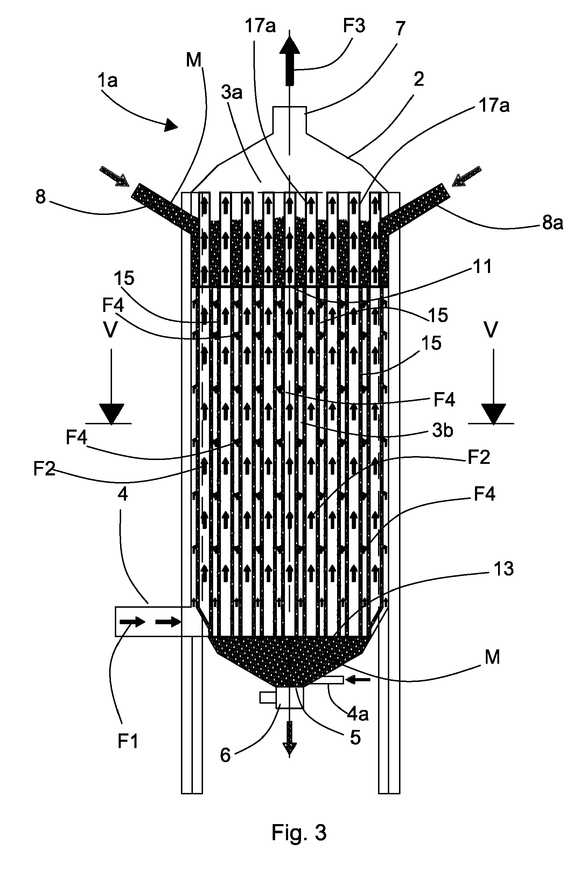

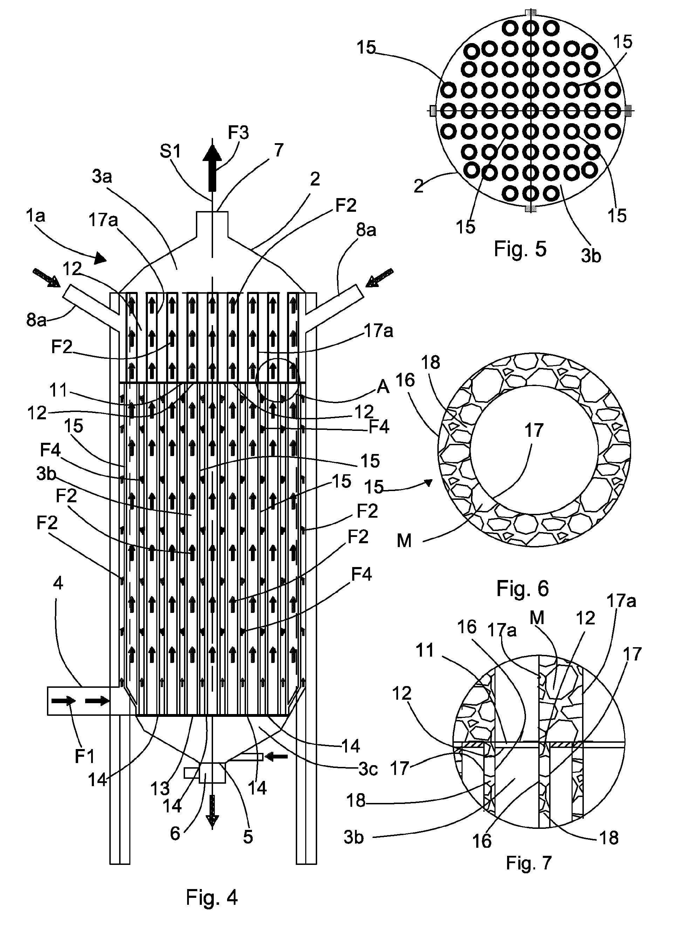

In figures 3 to 7 a second embodiment of a filter 1a according to the invention is illustrated. Corresponding parts are marked by the same reference numbers used in the description of the embodiment of a filter according to the invention of Figures 1 and 2.

The filter 1a comprises a body 2 inside which an upper chamber 3a, a lower chamber 3c and an intermediate chamber 3b are obtained. The upper chamber 3a is separated from the intermediate chamber 3b by a first separating plate 11 provided with a plurality of first holes 12 distributed on the surface of the first separating plate 11. The lower chamber 3c is separated from the intermediate chamber 3b by a second separating plate 13, provided with a plurality of second holes 14 distributed on the surface of the second separating plate 13. In the intermediate chamber 3b there is arranged a plurality of tubular elements 15, arranged parallel to a longitudinal axis S1 of the body 2. Each tubular element 15 comprises an external tubular element 16, inside which an internal tubular element 17 is arranged. Between the external tubular element 16 and the internal tubular element 17 a gaps 18 is defined into which a filtering material M is delivered.

The internal tubular elements 17 communicate, at the top end thereof, with further tubular elements 17a that are arranged in the upper chamber 3a and constitute a prolongation of the internal tubular elements 17. The further tubular elements 17a are open at both ends, so as to communicate with both the internal tubular elements 17 and with the upper chamber 3a. Further, the side surfaces of the further tubular elements 17a are not permeable to the gaseous fluid. The internal tubular elements 17 are closed, at the lower end thereof, by the second separating plate 13.

The gaps 18 are open at both ends and lead, at the respective top ends thereof, into the first holes 12 of the first separating plate 11, and, at the respective lower ends thereof, into the second holes 14 of the second separating plate 13.

The external tubular elements 16 and the internal tubular elements 17 have a side surface with a latticed structure that is suitable for enabling the passage of a gaseous fluid from the outside to the inside of the respective tubular element, and vice versa.

The upper chamber 3a is provided with a discharging conduit 7 of the filtered gaseous fluid and with a first loading conduit 8 and with a second loading conduit 8a through which the filtering material M can be delivered to the upper chamber 3a. The first loading conduit 8 can also be used for delivering an inert gas, for example nitrogen in said upper chamber 3a, whereas the second loading conduit 8a can also be used to evacuate from said upper chamber 3a said inert gas.

The intermediate chamber 3b is provided with a delivery conduit 4 del gaseous fluid to be filtered.

The lower chamber 3c is provided with a discharging mouth 5 of the exhausted filtering material M, closed by a check valve 6, for example a star valve.

The lower chamber 3c can be further provided with a further delivery conduit 4a through which an inert gas, for example nitrogen, can be delivered in said lower chamber 3c.

The operation of the filter 1a according to the invention is the following:
the filtering material M is delivered to the upper chamber 3a through the loading conduits 8, 8a and, through the first holes 12 of the first separating plate 11 passes into the gaps 18 between the first tubular elements 16 and the second tubular elements 17. After the gaps 18 and the zone of the upper chamber 3a comprised between the further tubular elements 17 have been filled, the gaseous fluid to be filtered is delivered to the intermediate chamber 3b through the delivery conduit 4. The gaseous fluid to be filtered is distributed in the intermediate chamber 3b and enters the tubular elements 15 through the latticed walls of the external tubular elements 16, passes through the gaps 18 and enters the internal tubular elements 17, going along the tubular elements 17 and then continuing along the further tubular elements 17a and entering the upper chamber 3a and then being discharged outside the filter 1a through the discharging conduit 7.

The path of the gaseous fluid from the inlet to the outlet of the filter 1a is indicated by the arrows F1, F2, F3, F4. In order to compensate for the load losses to which the gaseous fluid is subjected when passing through the filtering material M, a positive pressure difference must be maintained between the delivery conduit 4 and the discharging conduit 7, i.e. the pressure in the delivery conduit 4 must be greater than the pressure in the discharging conduit 7. The pressure difference between the delivery conduit and the discharging conduit must be greater than the load losses to which the gaseous fluid is subjected when traversing the filter 1. This can be obtained by delivering the pressurised gaseous fluid to the delivery conduit 4, or creating a vacuum in the discharging conduit 7. Whilst the gaseous fluid traverses the filtering material M in the gaps 18 and in the upper chamber 3a, the filtering material M therein removes from the gaseous fluid possible solid particles and aggressive chemical agents contained therein.

The filtering material M delivered in the gaps 18 of the tubular elements 15 descends through the force of gravity into the lower chamber 3c, passing through the second holes 14 of the second separating plate 13 and can be discharged from the lower chamber 3c through the discharging mouth 5 by opening the check valve 6, when the filtering material M is exhausted, i.e. when the filtering power thereof falls below a preset value. Whilst the exhausted filtering material M is removed through the discharging mouth 5, new filtering material M that had been accumulated in the upper chamber 3a passes into the gaps 18 and simultaneously new filtering material M can be delivered to the upper chamber 3a, through the loading conduits 8, 8a. In this manner it is possible to generate simply and rapidly the filter 1, discharging the exhausted filtering material M from the lower chamber 3c and delivering new filtering material M to the upper chamber 3a. This operation can be conducted without needing to interrupt the flow of fluid to be filtered in the filter 1a, which leads to the advantageous elimination of downtime for cleaning the filter, which is inevitable in filters known from the prior art. The exhausted filtering material M can be replaced at set intervals, depending on the nature and flowrate of the gaseous fluid to be filtered, or when the management software detects, on the basis of the signals of the first acidity sensor and of the second acidity sensor that the filtering material is exhausted and has to be replaced.

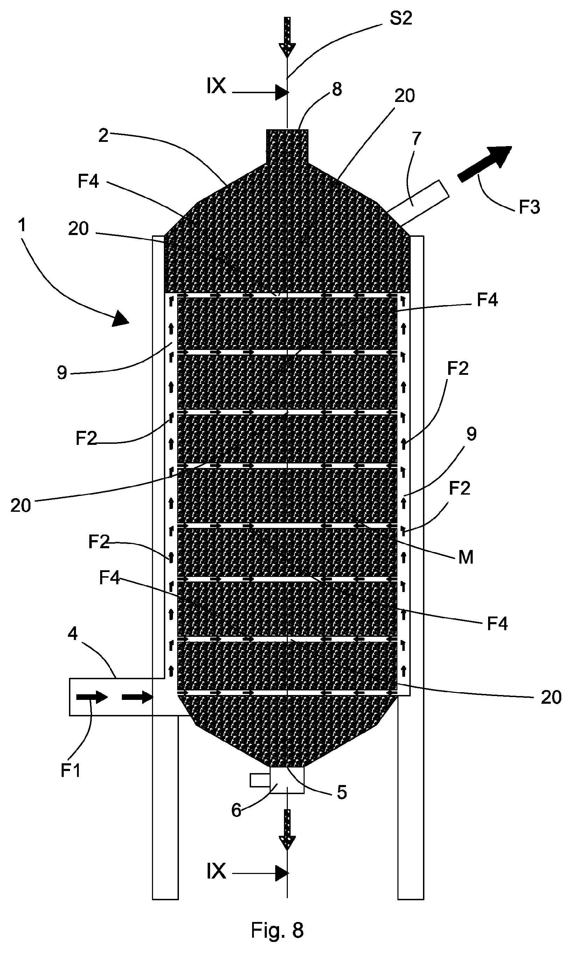

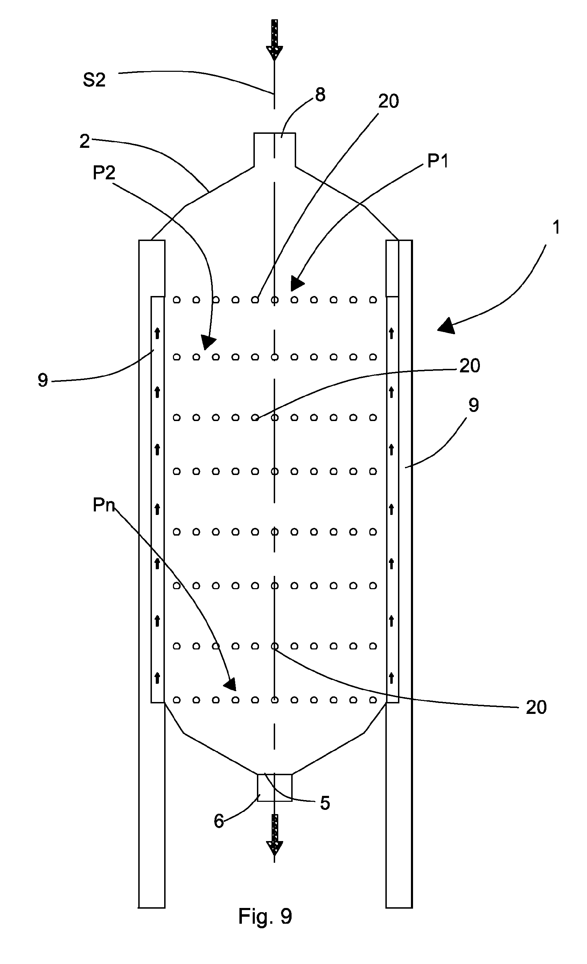

In Figures 8 and 9 a third embodiment of a filter 1b according to the invention is illustrated. Corresponding parts are marked by the same reference numbers used in the description of the embodiments of a filter according to the invention of Figures 1 to 7.

The filter 1b comprises a body 2 inside which a chamber 3 is obtained, which is filled with a filtering material M. The filtering material can consist, for example, of a mixture of adsorbent materials to which lime and/or soda is added.

In the lower part of the body 2 there are provided a delivery conduit 4 for delivering a gaseous fluid to be filtered and a discharging mouth 5, closed by a check valve 6, for example a star valve, by means of which the exhausted filtering material M can be can be discharged from the body 2, to be replaced with new filtering material M.

The delivery conduit 4 communicates with a liner 9 that surrounds the chamber 3 and communicates with a plurality of tubular elements 20 arranged on a plurality of planes PI, P2...Pn that are substantially perpendicular to a longitudinal axis S2 of the body 2.

The side surface of the tubular elements 20 is provided with openings, which are not visible in Figures 8, 9 and 10, which place the tubular elements 20 in communication with the chamber 3. The aforesaid openings can be obtained by making the side surface of the tubular elements 20 with a latticed structure.

The operation of the filter 1b according to the invention is the following:
the gaseous fluid to be filtered is delivered to the filter 1 through the delivery conduit 4 and
enters the liner 9 that surrounds the chamber 3 that is filled with the filtering material M.

From the liner 9 the gaseous fluid to be filtered enters the tubular elements 20 and, through the openings of the side surface of the tubular elements 20 enters the chamber 3, to exit therefrom through the discharging conduit 7 after traversing the filtering material M, which removes from the gaseous fluid possible solid particles and aggressive chemical agents contained therein.

The arrows F1, F2, F3 and F4 indicate the path of the gaseous fluid from the inlet to the outlet of the filter 1b.

In order to compensate for the load losses to which the gaseous fluid is subjected when passing through the filtering material M the pressure in the delivery conduit 4 is greater than the pressure in the discharging conduit 7. The pressure difference between the delivery conduit and the discharging conduit must be greater than the load losses to which the gaseous fluid is subjected when traversing the filter 1b. This can be obtained by delivering the pressurised gaseous fluid to the delivery conduit 4, or creating a vacuum in the discharging conduit 7.

The exhausted filtering material M can be discharged from the chamber 3 through the discharging mouth 5 by opening the check valve 6, and be replaced with new filtering material M, delivered through the loading conduit 8.

This operation can be conducted without needing to interrupt the flow of fluid to be filtered in the filter 1, which leads to the advantageous elimination of downtime for cleaning the filter, which is inevitable in filters known from the prior art. The exhausted filtering material M can be replaced at set intervals, depending on the nature and flowrate of the gaseous fluid to be filtered, or when the management software detects, on the basis of the signals of the first acidity sensor and of the second acidity sensor that the filtering material is exhausted and has to be replaced.

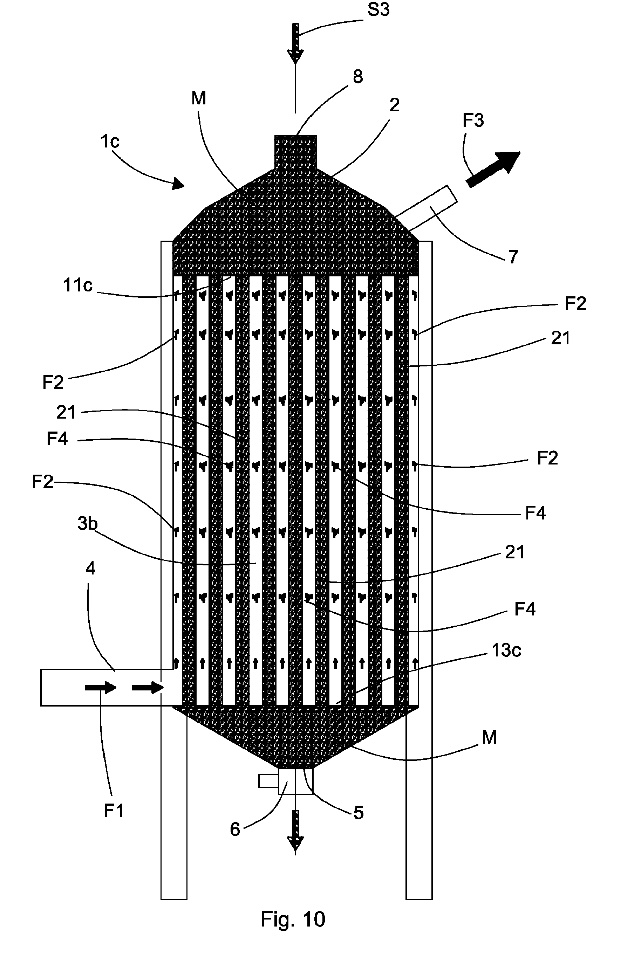

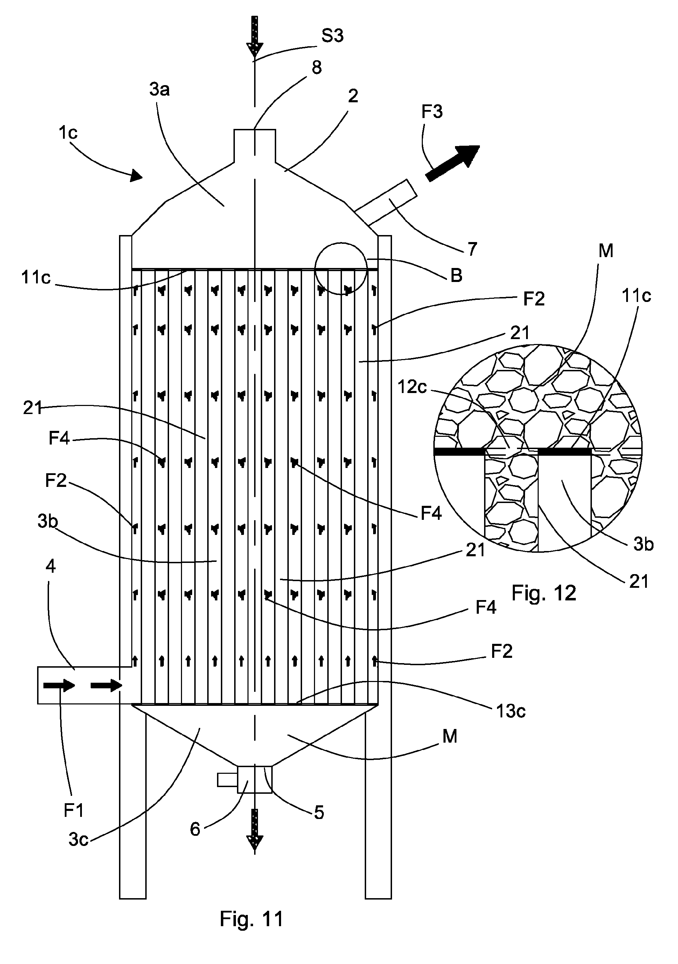

In Figures 10, 11 and 12 there is illustrated a fourth embodiment of a filter 1c according to the invention. Corresponding parts are marked by the same reference numbers used in the description of the embodiments of a filter according to the invention of Figures 1 to 9.

The filter 1c comprises a body 2 inside which are obtained an upper chamber 3a, a lower chamber 3c and a intermediate chamber 3b. The upper chamber 3a is separated from the intermediate chamber 3b by a first separating plate 11c provided with a plurality of first holes 12c distributed on the surface of the first separating plate 11. The lower chamber 3c is separated from the intermediate chamber 3b by a second separating plate 13c, provided with a plurality of the second holes 14c distributed on the surface of the second separating plate 13c.

In the intermediate chamber 3b there is arranged a plurality of tubular elements 21, arranged parallel to a longitudinal axis S3 of the body 2.

The tubular elements 22 are open at both ends and lead, at the respective upper ends, into the first holes 12c of the first separating plate 11c, and, at the respective lower ends thereof, into the second holes 14c of the second separating plate 13c.

The tubular elements 22 have a side surface with a latticed structure, that is suitable for permitting the passage of a gaseous fluid from the outside to the inside of the respective tubular element, and vice versa.

The upper chamber 3a is provided with a discharging conduit 7 of the filtered gaseous fluid and of one loading conduit 8 through which the filtering material M can be delivered to the upper chamber 3a.

The intermediate chamber 3b is provided with a delivery conduit 4 of the gaseous fluid to be filtered.

The lower chamber 3c is provided with a discharging mouth 5 of the exhausted filtering material M, closed by a check valve 6, for example a star valve.

The operation of the filter 1a according to the invention is the following:
the filtering material M is delivered to the upper chamber 3a through the loading conduit 8 and, through the first holes 12c of the first separating plate 11c, to the tubular elements 21.

After filling of the upper chamber 3a and of the tubular elements 21, the gaseous fluid to be filtered is delivered to the intermediate chamber 3b through the delivery conduit 4. The gaseous fluid to be filtered is distributed in the intermediate chamber 3b and enters the tubular elements 21 through the latticed walls thereof, going along the latticed walls and then being delivered into the upper chamber 3a through the first holes 12c of the first separating plate 11c and being discharged outside the filter 1a through the discharging conduit 7.

The path of the gaseous fluid from the inlet to the outlet of the filter 1a is indicated by the arrows F1, F2, F3, F4.

As in the other embodiments illustrated and disclosed, in order to compensate for the load losses to which the gaseous fluid is subjected when passing through the filtering material M the pressure in the delivery conduit 4 is required to be greater than the pressure in the discharging conduit 7. The pressure difference between the delivery conduit and the discharging conduit must be greater than the load losses to which the gaseous fluid is subjected when traversing the filter 1. This can be obtained by delivering the pressurised gaseous fluid to the delivery conduit 4, or creating a vacuum in the discharging conduit 7. Whilst the gaseous fluid traverses the filtering material M in the tubular elements 21 and in the upper chamber 3a, the filtering material M present therein removes from the gaseous fluid possible solid particles and aggressive chemical agents contained therein.

The filtering material M delivered in the tubular elements 21 drops through the force of gravity through the lower chamber 3c passing through the second holes 14c of the second separating plate 13c and can be discharged from the lower chamber 3c through the discharging mouth 5 by opening the check valve 6, when the filtering material M is exhausted, i.e. when the filtering power thereof falls below a preset value. In this manner it is possible to regenerate the filter 1 rapidly and simply, discharging the exhausted filtering material M from the lower chamber 3c and delivering new filtering material M to the upper chamber 3a. This operation can be conducted without needing to interrupt the flow of fluid to be filtered in the filter 1a, which leads to the advantageous elimination of downtime for cleaning the filter, which is inevitable in filters known from the prior art. The exhausted filtering material M can be replaced at set intervals, depending on the nature and flowrate of the gaseous fluid to be filtered, or when the sensor warns that the filtering material is exhausted and has to be replaced.

The filter according to the invention is able to operate efficiently both if the fluid to be filtered is at a low temperature, for example at ambient temperature and at a high temperature, for example several hundred degrees.

Further, the filter according to the invention is particularly effective for lowering, even at high temperatures, the percentage of H₂S and of HF that may be contained in the fluid to be filtered and for eliminating the CO₂ contained in said fluid.

This is particularly important inasmuch as the H₂S contained in a gaseous current cannot be discharged into the atmosphere because in addition to being very malodorous, is the cause of great irritation to the eyes and HF is a highly corrosive acid that also attacks stainless steel and enamelled glass and metal sheets.

In order to lower the H₂S content of a gaseous current, as a filtering material granulate of bentonite mixed with expanded clay impregnated with ferrous oxide can be used, the H₂S is fixed as ferric sulphide: each kg of iron oxide is able to absorb about 600 grams of H₂S. When the filtering material is exhausted it can be regenerated by blowing air, which converts the ferric sulphide into iron oxide, which can be reused and into solid elementary sulphur, which remains retained in the solid mass. When the quantity of sulphur exceeds 2,5 kg, for each kg of iron oxide it is possible to extract sulphur or transfer the mixture to industries of the sector, thus also obtaining financial revenue.

In order to lower the HF content in a gaseous current, molecular sieves can be used, with the addition of expanded clay mixed with hydrated lime, having a high grade of absorption and thus of reaction surface.

The filter according to the invention is also effective for filtering sulphur and the compounds thereof contained in combustible gases such as methane, syngas, biogas etc. before the gases are used to supply internal combustion engines or gas turbines. It is in fact known that internal combustion engines and gas turbines used with gases containing sulphur have extremely short lives.

In the practical embodiment, the features of the invention can be different from those illustrated previously but be technically equivalent thereto without falling outside the scope of the present invention.

## Claims

1. Adsorption filter (1a; 1c) comprising a body (2) inside which a chamber (3b) is defined into which a gaseous fluid to be filtered is delivered, said body (2) being provided with a delivery conduit (4) for delivering said gaseous fluid to said chamber (3b) and with a discharging conduit (7) for discharging the gaseous fluid filtered by the body (2), inside said body (2) it being possible to deliver a filtering material (M) that is intended for being traversed by said gaseous fluid, said body (2) being provided above with at least one loading conduit (8, 8a) for said filtering material (M) and with a discharging mouth (5) associated with a check valve (6), said filtering material (M) being suitable for removing from said gaseous fluid solid particles and harmful gaseous substances contained therein, **characterised in that** it further comprises an upper chamber (3a) communicating with said at least one loading conduit (8, 8a) and with said discharging conduit (7) and a lower chamber (3c) communicating with said discharging mouth (5), said chamber (3b) being an intermediate chamber arranged between said upper chamber (3a) and said lower chamber (3c), said intermediate chamber (3b) being separated from said upper chamber (3a) by a first separating plate (11; 11c) and being separated from said lower chamber (3c) by a second separating plate (13; 13c).

2. Filter (1a; 1c) according to claim 1, wherein in said intermediate chamber (3b) there is arranged a plurality of tubular elements (15; 21) that are substantially parallel to a longitudinal axis (S1; S3) of said body (2), it being possible to deliver said filtering material (M) inside said tubular elements, said tubular elements (15; 21) communicating through the respective side surfaces with said intermediate chamber (3b).

3. Filter (1a; 1c) according to claim 2 wherein said side surfaces are made with a latticed structure.

4. Filter (1a; 1c) according to claim 2, or 3, wherein said tubular elements (15; 21) communicate above with said upper chamber (3a) by first openings (12; 12c) of said first separating plate (11; 11c) and communicate with said lower chamber (3c) by second openings (14; 14c) of said second separating plate (13; 13c).

5. Filter (1a) according to any one of claims 2 to 4, wherein each of said tubular elements (15) comprises an external tubular element (16) and an internal tubular element (17) between which a gap (18) is defined, said filtering material (M) being able to be delivered into said gap (18).

6. Filter (1a) according to claim 5, wherein said gap (18) communicates with said upper chamber (3a) through said first openings (12) of said first separating plate (11) and communicates with said lower chamber (3c) through said second openings (14) of said second separating plate (13).

7. Filter (1a) according to claim 5, or 6, wherein said internal tubular elements (17) communicate through said first openings (12) with further tubular elements (17a) arranged in said upper chamber (3a) and open at both ends thereof.

8. Filter (1a) according to any one of claims 5 to 7, wherein the respective side surfaces of said external tubular elements (16) and of said internal tubular elements (17) are provided with openings for the passage of said gaseous fluid.

9. Filter (1a) according to claim 7, or 8, wherein the side surfaces of said further tubular elements (17a) are not permeable to said gaseous fluid.

10. Filter (1a) according to claim 8, or 9, wherein the respective side surfaces of said external tubular elements (16) and of said internal tubular elements (17) are made with a latticed structure.

11. Adsorption filter (1; 1b) comprising a body (2) inside which a chamber (3) is defined into which a gaseous fluid to be filtered is delivered, said body (2) being provided with a delivery conduit (4) for delivering said gaseous fluid to said chamber (3) and with a discharging conduit (7) for discharging the gaseous fluid filtered by the body (2), inside said body (2) it being possible to deliver a filtering material (M) that is intended for being traversed by said gaseous fluid, said body (2) being provided above with at least one loading conduit (8, 8a) for said filtering material (M) and with a discharging mouth (5) associated with a check valve (6), said filtering material (M) being suitable for removing from said gaseous fluid solid particles and harmful gaseous substances contained therein, **characterised in that** said delivery conduit (4) leads into a liner (9) that surrounds said chamber (3) and communicates therewith through openings made in a surface (10) of the liner (9) facing the inside of the chamber (3).

12. Filter (1; 1b) according to claim 11, wherein said surface (10) is made with a latticed structure.

13. Filter (1b) according to claim 11, or 12, wherein in said chamber (3) there is arranged a plurality of tubular elements (20) arranged on planes (PI, P2, ..., Pn) that are substantially perpendicular to a longitudinal axis (S2) of said body (2), said tubular elements (20) communicating, at the respective ends, with said liner (9) and, through openings made in the side surfaces thereof, with said chamber (3).

14. Filter (1b) according to claim 13, wherein said side surfaces of said tubular elements (20) are made with a latticed structure.

15. Filter (1; 1a; 1b; 1c) according to any preceding claim, wherein said filtering material (M) comprises a mixture of adsorbent materials to which lime and/or soda is added, the nature of said adsorbent materials depending on the nature of the harmful substances that have to be eliminated from the gaseous fluid to be filtered.

16. Filter according to claim 15, wherein said mixture of adsorbent materials comprises bentonite, and/or ferrous oxide, and/or expanded clay, and/or hydrated lime, and/or molecular sieves.

17. Filter (1; 1a; 1b; 1c) according to any preceding claim, wherein between said delivery conduit (4) and said discharging conduit (7) a positive pressure difference is maintained.

18. Filter (1; 1a; 1b; 1c) according to any preceding claim, **characterised in that** it is suitable for operating efficiently both when the fluid to be filtered is at ambient temperature and when the fluid to be filtered is at a temperature of several hundred degrees.

19. Filter (1; 1a; 1b; 1c) according to any preceding claim, **characterised in that** even at a temperature of several hundred degrees it is able to lower, the percentage of H₂S and/or the percentage of HF contained in said fluid to be filtered.

20. Filter (1; 1a; 1b; 1c) according to any preceding claim, **characterised in** it is substantially able to eliminate the CO₂ from said fluid to be filtered.
